# EUROPÄISCHE PATENTANMELDUNG

(11) **EP 1 617 383 A2**
(43) Veröffentlichungstag der Anmeldung: **18.01.2006**
(21) Anmeldenummer: 05104849.4
(22) Anmeldetag: 03.06.2005
(51) Int. Cl.: G07C 9/00

(54) **Elektronische Kontrolleinrichtung und Verwendung eines einen passiven Transponder aufweisenden Schlüssels**

(30) Priorität: 15.07.2004 DE 102004034109
(71) Anmelder: Aug. Winkhaus GmbH & Co. KG, D-48291 Telgte (DE)
(72) Erfinder: Bohn, Thomas, 48153, Münster (DE)

(57) **Zusammenfassung**

Bei einer elektronischen Kontrolleinrichtung (5) wird ein passiver Transponder (8) eines Schlüssels (7) einer Schließanlage (3) zur Freigabe einer elektronischen Datenverarbeitungsanlage (4) oder eines Programms einer elektronischen Datenverarbeitungsanlage (4) eingesetzt. Der Besitz eines bestimmten Schlüssels (7) lässt sich einfach einer bestimmten Person zuordnen, die durch eine Abfrage eines in dem Transponder (8) enthaltenen Codes identifiziert wird. Diesem Code sind in der Kontrolleinrichtung (5) Freigaberechte zugeordnet, welche es der Person ermöglichen, bestimmte Programme zu starten oder Datenbestände einzusehen.

## Beschreibung

Die Erfindung betrifft eine elektronische Kontrolleinrichtung mit einer Steuereinrichtung zur Ansteuerung einer elektronischen Datenverarbeitungsanlage oder eines Programms der Datenverarbeitungsanlage und mit einer Leseeinheit zur Erfassung eines abgespeicherten Codes. Weiterhin betrifft die Erfindung eine vorteilhafte Verwendung eines einen passiven Transponder aufweisenden Schlüssels einer elektronischen Schließanlage.

Elektronische Kontrolleinrichtungen werden häufig eingesetzt, um Zugriffsrechte auf geschützte Daten oder Programme der Datenverarbeitungsanlagen zu verwalten oder um ein Hochfahren der Datenverarbeitungsanlage freizugeben oder zu unterbinden. Aus der Praxis sind beispielsweise Kartenleser bekannt geworden, durch den eine Magnetkarte oder eine Karte mit einem Speicherchip mit dem darauf abgespeicherten Code gezogen wird. Die Steuereinrichtung erfasst den Code und steuert die Datenverarbeitungsanlage an. Weiterhin sind Kontrolleinrichtungen bekannt geworden, bei denen die Zugriffsrechte von der Eingabe eines Passwortes verteilt werden.

Nachteilig bei der bekannten Kontrolleinrichtung ist jedoch, dass von einer Person häufig eine Vielzahl von Programmen bedient werden soll, die jeweils eine eigene Karte mit dem Code oder ein eigenes Passwort erfordern. Die Handhabung der Karte oder der Karten und mehrerer Passwörter ist jedoch sehr umständlich.

Man könnte daran denken, auf einer einzigen Karte mehrere Codes abzuspeichern, um mehrere Zugriffsrechte auf Daten und Programme zu verwalten oder Datenverarbeitungsanlagen anzusteuern. Dies erfordert jedoch einen hohen Aufwand für die Bereitstellung und Programmierung der für verschiedene Lesesysteme auszulegenden Karte.

Der Erfindung liegt das Problem zugrunde, eine elektronische Kontrolleinrichtung der eingangs genannten Art so zu gestalten, dass sie eine besonders einfache Handhabung von verschiedenen Zugriffsrechten für Datenverarbeitungsanlagen und Programmen ermöglicht. Weiterhin liegt der Erfindung das Problem zugrunde, eine vorteilhafte Verwendung eines einen passiven Transponder aufweisenden Schlüssels eines Wohn- oder Geschäftshauses zu schaffen.

Dieses Problem wird erfindungsgemäß dadurch gelöst, dass die Leseeinheit eine Antenne aufweist, dass die Antenne zur Sendung einer Aktivierungsenergie für einen passiven Transponder und Erfassung eines Codes des passiven Transponders ausgebildet ist und dass der passive Transponder Teil eines Schlüssels einer elektronischen Schließanlage eines Wohn- oder Geschäftshauses ist.

Durch diese Gestaltung lässt sich die Datenverarbeitungsanlage oder das Programm der Datenverarbeitungsanlage mit dem meist ohnehin vorhandenen Transponder des Schlüssels ansteuern. Daher wird zur Festlegung der Freigabeberechtigung abweichend von den bekannten Kontrolleinrichtungen nicht ein für die jeweilige Datenverarbeitungsanlage erforderlicher Code erzeugt, sondern es wird erfindungsgemäß ein vorhandener Code des Transponders des Schlüssels verwendet. Bei Schließanlagen von Wohn- oder Geschäftshäusern werden Schlüssel mit hierarchisch untergliederten Transpondern eingesetzt, so dass der Besitz eines bestimmten Transponders einer einzigen Person zugeordnet und anhand des Schlüssels identifiziert werden kann. Dieser Person lassen sich dank der Erfindung vorgesehene Zugriffsrechte zuordnen, ohne dass eine weitere Codekarte oder ein Passwort in die Kontrolleinrichtung eingegeben werden muss. Die Handhabung der Zugriffsrechte von Datenverarbeitungsanlagen und deren Programme gestaltet sich hierdurch besonders komfortabel. Bei der Datenverarbeitungsanlage kann es sich um handelsübliche Computer, Netzwerkserver, Computernetzwerke, elektronische Kassen oder dergleichen handeln, für dessen Zugriff meist ein Schlüssel oder Passwort erforderlich ist. Die Programme können den Zugriff, beispielsweise auf Datenbestände, ein Netzwerk oder dergleichen regeln, wofür bislang ebenfalls meist ein Passwort erforderlich ist. Selbstverständlich können die Programme auch Funktionen, beispielsweise die eines Administrators, beinhalten, die erfindungsgemäß mit dem Transponder des Schlüssel der Schließanlage aktiviert oder deaktiviert werden.

Die Verwaltung der Zugriffsrechte verschiedener Transponder erfordert gemäß einer vorteilhaften Weiterbildung der Erfindung einen besonders geringen Aufwand, wenn die Steuereinrichtung einen Speicher zur Ablage von erfassten Codes verschiedener Transponder hat. Über die Ablage der erfassten Codes lassen sich zudem Zugriffe auf die Datenverarbeitungsanlage oder auf abgelegte Daten in der Datenverarbeitungsanlage protokollieren und eine Zeiterfassung für den Transponder mit dem entsprechenden Code besitzende Personen erstellen.

Die Programmierung der erfindungsgemäßen Kontrolleinrichtung erfordert einen besonders geringen Aufwand, wenn die Steuereinrichtung eine Eingabeeinheit zur Zuordnung von Freigaberechten der Datenverarbeitungsanlage oder des Programms zu zumindest einem erfassten Code aufweist. Damit lassen sich über die Eingabeeinheit beispielsweise zunächst die Freigaberechte auswählen und anschließend der Code aus dem Transponder auslesen und den Freigaberechten zuordnen. Anschließend hat der Besitzer des den Transponder mit dem entsprechenden Code aufweisenden Schlüssels die Freigaberechte in der jeweiligen Datenverarbeitungsanlage oder dem Programm.

Zur Vereinfachung einer Zeiterfassung bei der Benutzung der Datenverarbeitungsanlage oder des Programms trägt es gemäß einer anderen vorteilhaften Weiterbildung der Erfindung bei, wenn die Steuereinrichtung den von der Leseeinheit erfassten Code des Schlüssels abspeichert.

Die erfindungsgemäße Kontrolleinrichtung lässt sich einfach mit bereits vorhandenen Datenverarbeitungsanlagen, wie beispielsweise Personalcomputern verbinden, wenn die Leseeinheit eine Schnittstelle für einen Anschluss an die Datenverarbeitungsanlage hat. Als Schnittstelle eignet sich insbesondere die bei heutigen Datenverarbeitungsanlagen häufig verwendete sogenannte USB-Schnittstelle.

Die erfindungsgemäße Kontrolleinrichtung erfordert einen besonders geringen baulichen Aufwand, wenn die Leseeinheit eine bauliche Einheit mit einer Tastatur der Datenverarbeitungsanlage bildet. Ein weiterer Vorteil dieser Gestaltung besteht darin, dass die Tastatur gleichzeitig die Eingabeeinheit der erfindungsgemäßen Kontrolleinrichtung ist, über die die Freigaberechte dem eingelesenen Code des Transponders zugeordnet werden können.

Der Schlüssel mit dem Transponder könnte beispielsweise unmittelbar vor die Antenne der Leseeinrichtung gehalten werden, um die Datenverarbeitungsanlage anzusteuern. Zur weiteren Vereinfachung der Handhabung der erfindungsgemäßen Kontrolleinrichtung trägt es jedoch bei, wenn die Antenne der Leseeinheit zur Übermittlung einer Aktivierungsenergie an den Transponder über eine vorgesehene Entfernung von einem bis zwei Metern ausgebildet ist. Hierdurch muss der den Transponder aufweisende Schlüssel nicht mehr hervorgeholt werden. Vielmehr genügt es, wenn die die Datenverarbeitungsanlage bedienende Person den Schlüssel mit sich führt. Ein weiterer Vorteil dieser Gestaltung besteht darin, dass bei regelmäßigem Auslesen des Codes ein Entfernen der Person von der Datenverarbeitungsanlage erfasst und die Datenverarbeitungsanlage gesperrt werden kann, wenn sich der Transponder außerhalb des Empfangsbereichs der Antenne befindet. Auch lässt sich durch das regelmäßige Auslesen des Transponders die Erfassung der Zeit, die die den Schlüssel besitzende Person an der Datenverarbeitungsanlage verbringt, automatisch ermitteln.

Eine große Funkstrecke über mehrere Meter und damit eine hohe Sendeleistung der Antenne lässt sich gemäß einer anderen vorteilhaften Weiterbildung der Erfindung einfach vermeiden, wenn die Leseeinheit einen Schacht zum Einführen des den Transponder der Schließanlage aufweisenden Schlüssels hat.

Das zweitgenannte Problem, nämlich die Schaffung einer vorteilhaften Verwendung eines einen passiven Transponder aufweisenden Schlüssels eines Wohn- oder Geschäftshauses wird erfindungsgemäß zum Ansteuern einer elektronischen Datenverarbeitungsanlage oder eines Programms für die elektronische Datenverarbeitungsanlage gelöst.

Hierdurch wird der meist ohnehin vorhandene Schlüssel verwendet, um die Datenverarbeitungsanlage anzusteuern. Die Ansteuerung kann beispielsweise ein Hochfahren der Datenverarbeitungsanlage, einen Start des Programms oder eines Moduls des Programms ermöglichen. Mit dem in dem Transponder abgelegten Code wird der Benutzer der Datenverarbeitungsanlage ausgewiesen und erhält beispielsweise die dem Code im Transponder entsprechenden Zugriffsrechte. Durch die erfindungsgemäße Verwendung des den passiven Transponder aufweisenden Schlüssels gestaltet sich die Handhabung der Datenverarbeitungsanlage besonders komfortabel.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Datenverarbeitungsanlage mit einer erfindungsgemäßen Kontrolleinrichtung,
- Fig. 1a: vergrößert die erfindungsgemäße Kontrolleinrichtung aus Figur 1 mit einem einen Transponder aufweisenden Schlüssel,
- Fig. 2: schematisch ein Flussdiagramm zum Programmablauf der erfindungsgemäßen Kontrolleinrichtung.

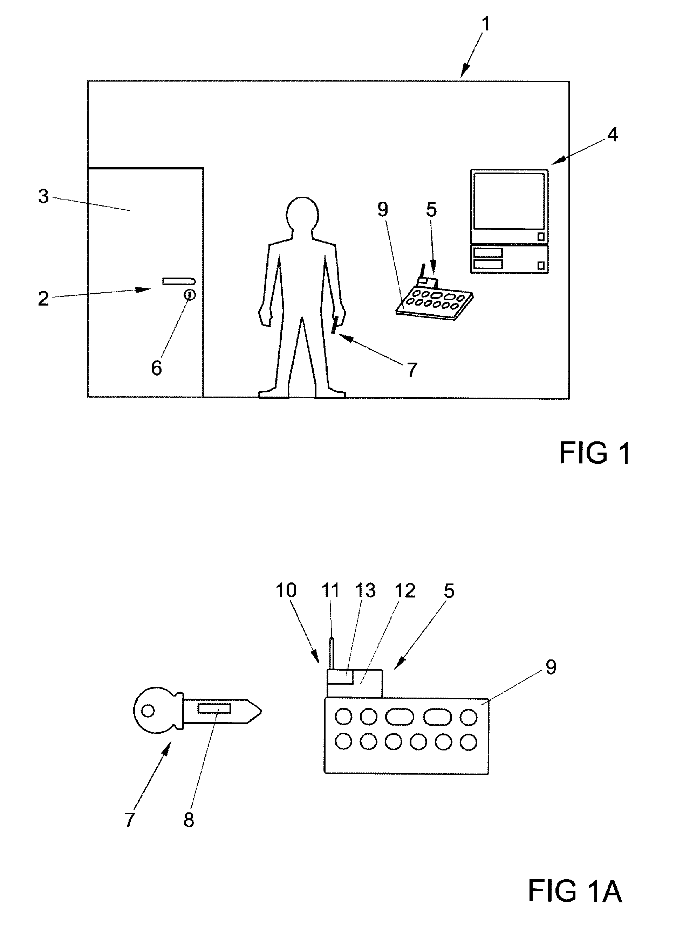

Figur 1 zeigt schematisch einen Raum 1 eines Wohn- oder Geschäftshauses mit einer elektronischen Schließanlage 2 zum Verriegeln und Entriegeln einer Tür 3 des Raumes 1. Innerhalb des Raumes 1 befindet sich eine elektronische Datenverarbeitungsanlage 4 mit einer elektronischen Kontrolleinrichtung 5. Die Tür 3 des Raumes 1 lässt sich von einem ansteuerbaren Sperrmechanismus 6 der elektronischen Schließanlage 2 verriegeln oder entriegeln. Der Sperrmechanismus 6 wird von einem in einem Schlüssel 7 angeordneten Transponder 8 angesteuert. Eine solcher Sperrmechanismus 6 ist beispielsweise aus der DE 100 20 038 A1 bekannt und dort ausführlich beschrieben. Der Schlüssel 7 mit dem passiven Transponder 8 zum Ansteuern eines solchen Sperrmechanismus 6 ist beispielsweise in der DE 199 06 578 A1 beschrieben. Daher wird für die Offenbarung des Sperrmechanismus 6 und des den Transponder 8 aufweisenden Schlüssels 7 ausdrücklich auf die DE 100 20 038 A1 und die DE 19 06 578 A1 Bezug genommen.

Die elektronische Kontrolleinrichtung 5 bildet mit einer Tastatur 9 der Datenverarbeitungsanlage 4 eine bauliche Einheit und hat eine Leseeinheit 10 mit einer Antenne 11. Die Leseeinheit 10 ist mit einer Steuereinrichtung 12 verbunden, welche die Datenverarbeitungsanlage 4 ansteuert. Die Antenne 11 übermittelt zu dem passiven Transponder 8 des Schlüssels 7 eine Aktivierungsenergie, worauf dieser einen Code an die Antenne 11 übermittelt. Dies kennzeichnet die Passivität des Transponders 8. Die Kontrolleinrichtung 5 weist einen Speicher 13 auf, in dem der Code abgespeichert und zudem mit einer Zugangsberechtigung verglichen wird. Figur 1a zeigt zur Verdeutlichung vergrößert die an der Tastatur 9 der Datenverarbeitungsanlage 4 aus Figur 1 angeordneten Kontrolleinrichtung 5 mit dem den Transponder 8 aufweisenden Schlüssel 7. Die Tastatur dient vorzugsweise als Eingabeeinheit zur Zuordnung von Zugangsberechtigungen verschiedener Transponder. Die Berechtigung zur Eingabe der Zugangsberechtigungen ist dabei selbstverständlich auf einen oder wenige Transponder begrenzt.

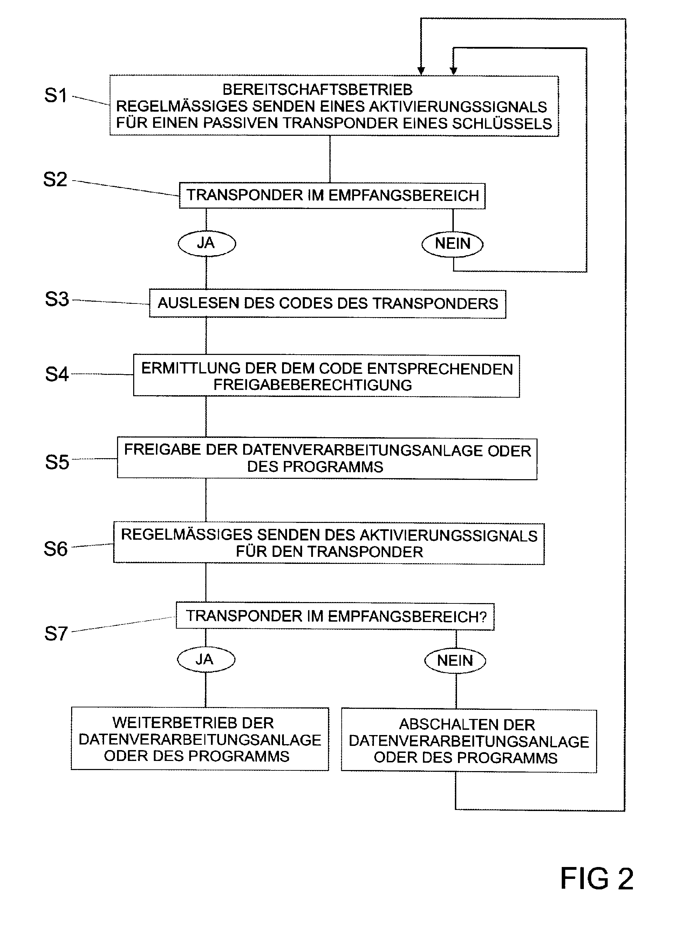

Figur 2 zeigt ein Flussdiagramm des Programmablaufs der elektronischen Kontrolleinrichtung 5 aus Figur 1. Hierbei wird in einem Schritt S1 im Bereitschaftsbetrieb der Kontrolleinrichtung 5 regelmäßig, beispielsweise in vorgegebenen Zeitintervallen, ein Signal gesendet, welches den in Figur 1a dargestellten passiven Transponder 8 mit elektrischer Energie versorgt, worauf dieser einen abgespeicherten Code aussendet. Der Code wird von der Antenne 11 der Kontrolleinrichtung 5 erfasst und an die Steuereinrichtung 12 übermittelt. Die Steuereinrichtung 12 erfasst in einem Schritt S2 anhand der empfangenen Signale, ob sich überhaupt ein Transponder 8 im Empfangsbereich befindet und liest bei Vorhandensein des Transponders 8 im Schritt S3 den Code aus. Weiterhin vergleicht die Steuereinrichtung 12 in einem Schritt S4 den Code mit im Speicher 13 abgelegten Codes, ob die den Transponder 8 besitzende Person berechtigt ist, die Datenverarbeitungsanlage 4 oder ein Programm der Datenverarbeitungsanlage 4 zu bedienen. Im Schritt S5 wird die Datenverarbeitungsanlage 4 entsprechend der Freigabeberechtigung freigegeben. In einem Schritt S6 wird regelmäßig ein Aktivierungssignal an den Transponder 8 übermittelt, so dass in einem Schritt S7 regelmäßig überprüft werden kann, ob sich der Transponder 8 noch im Empfangsbereich der Antenne 11 befindet. Bei Vorhandensein des Transponders 8 wird die Datenverarbeitungsanlage 5 entsprechend der Freigabeberechtigung weiter betrieben, während sie bei Fehlen des Transponders 8 abgeschaltet wird. Anstelle der Abschaltung kann selbstverständlich auch ein Bildschirmschoner eingeschaltet und die Tastatur 9 gesperrt werden.

## Patentansprüche

1. Elektronische Kontrolleinrichtung mit einer Steuereinrichtung zur Ansteuerung einer elektronischen Datenverarbeitungsanlage oder eines Programms der Datenverarbeitungsanlage und mit einer Leseeinheit zur Erfassung eines abgespeicherten Codes, **dadurch gekennzeichnet, dass** die Leseeinheit (10) eine Antenne (11) aufweist, dass die Antenne (11) zur Sendung einer Aktivierungsenergie für einen passiven Transponder (8) und Erfassung eines Codes des passiven Transponders (8) ausgebildet ist und dass der passive Transponder (8) Teil eines Schlüssels (7) einer elektronischen Schließanlage (2) eines Wohn- oder Geschäftshauses ist.

2. Elektronische Kontrolleinrichtung nach Anspruch 1, **dadurch gekennzeichnet, dass** die Steuereinrichtung (12) einen Speicher (13) zur Ablage von erfassten Codes verschiedener Transponder (8) hat.

3. Elektronische Kontrolleinrichtung nach Anspruch 1 oder 2, **dadurch gekennzeichnet, dass** die Steuereinrichtung (12) eine Eingabeeinheit zur Zuordnung von Freigaberechten der Datenverarbeitungsanlage (4) oder des Programms zu zumindest einem erfassten Code aufweist.

4. Elektronische Kontrolleinrichtung nach zumindest einem der vorhergehenden Ansprüche, **dadurch gekennzeichnet, dass** die Steuereinrichtung (12) den von der Leseeinheit (10) erfassten Code des Schlüssels (7) abspeichert.

5. Elektronische Kontrolleinrichtung nach zumindest einem der vorhergehenden Ansprüche, **dadurch gekennzeichnet, dass** die Leseeinheit (10) eine Schnittstelle für einen Anschluss an die Datenverarbeitungsanlage (4) hat.

6. Elektronische Kontrolleinrichtung nach zumindest einem der vorhergehenden Ansprüche, **dadurch gekennzeichnet, dass** die Leseeinheit (10) eine bauliche Einheit mit einer Tastatur (9) der Datenverarbeitungsanlage (4) bildet.

7. Elektronische Kontrolleinrichtung nach zumindest einem der vorhergehenden Ansprüche, **dadurch gekennzeichnet, dass** die Antenne (11) der Leseeinheit (10) zur Übermittlung einer Aktivierungsenergie an den Transponder (8) über eine vorgesehene Entfernung von einem bis zwei Metern ausgebildet ist.

8. Elektronische Kontrolleinrichtung nach zumindest einem der vorhergehenden Ansprüche, **dadurch gekennzeichnet, dass** die Leseeinheit (10) einen Schacht zum Einführen des den Transponder (8) der Schließanlage (2) aufweisenden Schlüssels (7) hat.

9. Verwendung eines einen passiven Transponder aufweisenden Schlüssels einer elektronischen Schließanlage eines Wohn- oder Geschäftshauses zum Ansteuern einer elektronischen Datenverarbeitungsanlage oder eines Programms für die elektronische Datenverarbeitungsanlage.
